# EUROPEAN PATENT APPLICATION

(11) **EP 2 538 314 A1**
(43) Date of publication of application: **26.12.2012**
(21) Application number: 11839468.3
(22) Date of filing: 21.02.2011
(51) Int. Cl.: G06F 3/048

(54) **METHOD, APPARATUS, AND TERMINAL DEVICE FOR GENERATING SOFT KEYBOARD**

(30) Priority: 11.11.2010 CN 201010540116
(71) Applicant: ZTE Corporation, Shenzhen, Guangdong 518057 (CN)
(72) Inventor: ZENG, Yiting, Shenzhen Guangdong 518057 (CN)
(74) Representative: Schröer, Gernot H.
(86) International application number: PCT/CN2011/071143
(87) International publication number: WO 2012/062064

(57) **Abstract**

A method, an apparatus, and a terminal device for generating a soft keyboard used to improve the generality of the terminal device are disclosed by the present invention. The method includes: receiving a request for realizing a customized soft keyboard; generating a shape profile of the soft keyboard according to shape information of the soft keyboard in the request; determining an identifier code corresponding to a button function event in the request according to a stored corresponding relationship between the function event and the identifier code, and generating a function information profile of the soft keyboard according to the determined identifier code; and generating the customized soft keyboard according to the shape profile and the function information profile.

## Description

### Technical Field

The present invention relates to the communication technology field, and in particular, to a method, apparatus and terminal device for generating a soft keyboard.

### Background of the Related Art

With the development of the mobile communication technology and the mobile terminal manufacturing technology, the full touch screen mobile terminal becomes a development trend of the mobile terminal because its usage convenience and brilliant shape are preferred by more and more users. Generally, the full touch screen mobile terminal does not have the traditional physical keyboard, and all inputs are realized depending on the soft keyboard on the touch screen.

At present, all soft keyboards on the full touch screen mobile terminal are preset by the mobile terminal manufacturer and has no selectivity, therefore, it has great limitation on the usage, for example, the palms of some users are very big, and the soft keyboard buttons preset by the manufacturer are small, which causes the problem that the user presses the button inaccurately which will cause too many inaccurate operations; and for example again, some users have their own button operation habits, but the soft keyboard preset by the terminal manufacturer cannot meet the user requirement; in addition, some mobile terminal games are configured on the mobile terminal, and, a plurality of mobile terminal games all have their own operation buttons, while the soft keyboard preset by the terminal manufacturer often cannot provide these various special buttons.

In view of this, the soft keyboards configured on the current full touch screen mobile terminal have a certain limitation, and its commonality is not good, which becomes one bottleneck of the high speed development of the full touch screen mobile terminal.

### Summary of the Invention

The present invention provides a method, apparatus and terminal device for generating a soft keyboard, used to improve the generality of the terminal device.

The present invention provides a method for generating a soft keyboard, comprising:
receiving a request for realizing a customized soft keyboard;
generating a shape profile of the soft keyboard according to shape information of the soft keyboard in the request;
determining an identifier code corresponding to a button function event in the request according to a stored corresponding relationship between a function event and the identifier code, and generating a function information profile of the soft keyboard according to the determined identifier code; and
generating the customized soft keyboard according to the shape profile and the function information profile.

The present invention provides an apparatus for generating a soft keyboard, comprising: a receiving unit, a shape configuration unit, a function configuration unit and a generating unit; wherein,
the receiving unit is configured to receive a request for realizing a customized soft keyboard;
the shape configuration unit is configured to generate a shape profile of the soft keyboard according to shape information of the soft keyboard in the request;
the function configuration unit is configured to determine an identifier code corresponding to a button function event in the request according to a stored corresponding relationship between a function event and the identifier code, and generate a function information profile of the soft keyboard according to the determined identifier code; and the generating unit is configured to generate the customized soft keyboard according to the shape profile and the function information profile.

The present invention further provides a terminal device, comprising: a receiving unit, a shape configuration unit, a function configuration unit and a generating unit; wherein,
the receiving unit is configured to receive a request for realizing a customized soft keyboard;
the shape configuration unit is configured to generate a shape profile of the soft keyboard according to shape information of the soft keyboard in the request;
the function configuration unit is configured to determine an identifier code corresponding to a button function event in the request according to a stored corresponding relationship between a function event and the identifier code, and generate a function information profile of the soft keyboard according to the determined identifier code; and the generating unit is configured to generate the customized soft keyboard according to the shape profile and the function information profile.

In the embodiment of the present invention, after receiving the request for realizing the customized soft keyboard, the shape profile of the soft keyboard is generated according to the soft keyboard shape information in the request, the identifier code corresponding to the button function event in the request is determined according to the stored corresponding relationship between the function event and the identifier code, and the function information profile of the soft keyboard is generated according to the determined identifier code, and the customized soft keyboard is generated according to the shape profile and the function information profile. It is obvious that when the soft keyboard shape information in the request for realizing the customized soft keyboard is different, then the generated soft keyboards are also different; the button function events in the request for realizing the customized soft keyboard are different, the identifier codes of each button in the soft keyboard are different as well, and the called function events are also different, therefore, different soft keyboards can be generated according to different user requirements or different application scenarios, thus a bottleneck of the high speed development of the portable terminal is broken through and the generality of the terminal device is improved greatly.

### Brief Description of Drawings

FIG. 1 is a flow chart of generating a soft keyboard according to an embodiment of the present invention;
FIG. 2 is a flow chart of generating a customized soft keyboard according to an embodiment of the present invention;
FIG. 3 is a structure diagram of an apparatus for generating a soft keyboard according to an embodiment of the present invention.

### Preferred Embodiments of the Present Invention

In the embodiment of the present invention, the terminal device has the function of customizing the soft keyboard, that is, generating two profiles of the soft keyboard, including the shape profile and the function information profile of the soft keyboard, according to the received request for realizing the customized soft keyboard. In this way, during the usage, the soft keyboard is generated through the shape profile, after clicking a certain point on the terminal device touch screen, the button corresponding to the touch point can be determined through the shape profile, and then, the identifier code corresponding to the button is determined through the function information profile, thus the function event corresponding to the identifier code is called and the corresponding operation is finished, thus, the use of the customized soft keyboard is realized.

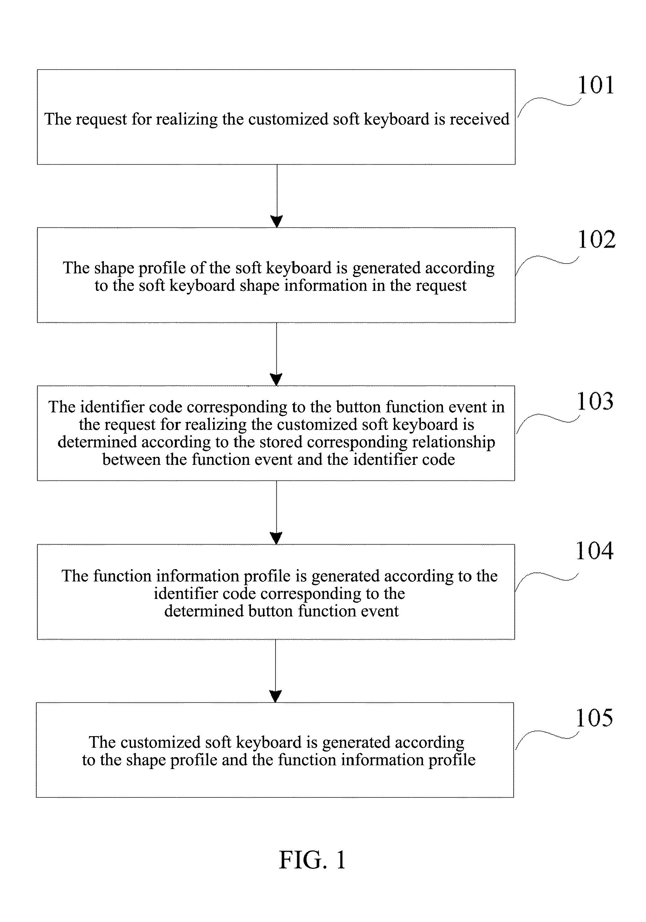

Referring to FIG. 1, in the embodiment of the present invention, the procedure of generating the soft keyboard includes the following steps:

in step 101: the request for realizing the customized soft keyboard is received.

The terminal device provides the soft keyboard design interface, in this way, after entering the soft keyboard design interface, it can initiate the request for realizing the customized soft keyboard to the terminal device, that is, the terminal device receives the request for realizing the customized soft keyboard. The request for realizing the customized soft keyboard includes: the shape information and the button function event of the soft keyboard.

Wherein, the shape information of the soft keyboard includes the shape information of the baseboard panel describing the soft keyboard, and the shape information describing the button in soft keyboard; and the button function event includes the information describing the function of the button. For different user requirements or in different application scenarios, the corresponding requests for realizing the customized soft keyboard are different. For example: the current application scenario requires that the baseboard panel of the soft keyboard is of a rectangle, including 40 buttons, the shapes of some buttons are round, and the shapes of some buttons are the rectangle. Wherein, the BUTTON 1 has a function of inputting the character A, the BUTTON2 has a function of ENTER, the BUTTON3 has a function of moving right, the BUTTON4 has the function of moving left, etc., then, the request for realizing the customized soft keyboard received by the terminal device includes the soft keyboard shape information and the button function event which describe the above-mentioned information.

Here, each button has one function event only, but the embodiment of the present invention is not limited to this, one button can have one, two, or a plurality of function events, that is, one button can correspond to one, two, or a plurality of function events.

In step 102: the shape profile of the soft keyboard is generated according to the soft keyboard shape information in the request.

Here, generating the shape profile of the soft keyboard includes: generating the baseboard panel profile of the soft keyboard and the button profile of each button in the soft keyboard.

The request for realizing the customized soft keyboard includes: the baseboard panel parameters and the shape parameters of each button. Wherein, the baseboard panel parameters include: one or more of shape, size, coordinate position and background picture of the baseboard panel. The shape parameters of the button include: one or more of shape, size, coordinate position and background picture of the button.

Here, the baseboard panel profile in the shape profile is generated firstly according to the baseboard panel parameters in the request for realizing the customized soft keyboard, including: storing the baseboard panel parameters into the shape profile of the soft keyboard; and then the button profile in the shape profile is generated according to the shape parameters of each button in the request for realizing the customized soft keyboard, including: storing the shape parameters of each button in the shape profile of the soft keyboard.

For example: the baseboard panel parameters in the request for defining the soft keyboard include: coordinate (0, 0), width 240, height 120, and the baseboard panel profile of its corresponding soft keyboard includes: FLAG: BOTTOM_PANEL/SHAPE: RECT/WIDTH: 240/HEIGHT: 120/POS_X: 0/POS_Y: 0/. The specific function of the profile is that: a rectangle with the width being 240 pixels and the height being 120 pixels is drawn at the position with the coordinate being (0, 0) on the screen, as the baseboard panel of the soft keyboard. What is described above is only a format of the profile, but the embodiment of the present invention is not limited to this, and also includes other profile formats.

The profile of each button is similar to this, and will not be repeated herein.

In the embodiment of the present invention, the baseboard panel parameters in the request for realizing the customized soft keyboard and the shape parameters of each button can be input directly by the user, or can be input by the user performing selection according to the options provided by the terminal device.

In step 103: the identifier code corresponding to the button function event in the request for realizing the customized soft keyboard is determined according to the stored corresponding relationship between the function event and the identifier code.

In the embodiment of the present invention, the corresponding relationship between the function event and the identifier code is preset in the operating system of the terminal device, that is, different operating systems have different corresponding relationships between the function events and the identifier codes, which is already set in the operating system of the terminal device, that is, the terminal device stores the corresponding relationship between the function event and the identifier code. Preferably, the corresponding relationship between the function event and the identifier code is one-to-one relationship. The function event in the terminal device includes the information describing the function of the button, and an executable API function.

The terminal device stores the corresponding relationship between the function event and the identifier code. Thus, after the shape profile of the soft keyboard is generated, the identifier code corresponding to each button function event in the request for realizing the customized soft keyboard can be determined according to the above-mentioned stored corresponding relationship.

For example: when the terminal device uses the BREW operating system, in the system, the configured corresponding relationship between the function event and the identifier code is shown in Table 1, that is, the terminal device stores the corresponding relationship as shown in Table 1.

**Table 1**

| The identifier code | The function event |
|---|---|
| FUNCTION_A | AVK_A; Input character "A" |
| FUNCTION_ENTER | AVK_ENTER; Enter |
| FUNCTION_RIGHT | AVK_RIGHT; Move right |
| FUNCTION_LEFT | AVK_LEFT; Move left |
| .... | .... |

In the operating system, the shape profile of the soft keyboard is already generated in the above-mentioned step, in this way, according to Table 1, the identifier code corresponding to the button function event of each button is found, for example: the button function event in the request for realizing the customized soft keyboard includes: the BUTTON4 has the function of moving left, that is, the function event is AVK_LEFT, and then its corresponding identifier code is determined as FUNCTION_LEFT according to Table 1.

In step 104: the function information profile is generated according to the identifier code corresponding to the determined button function event.

After determining the identifier code corresponding to the button function event of each button in the soft keyboard, each button, the button function event and the corresponding identifier code are written into the function information profile, that is, the corresponding function information profile is generated. For example: the button function event in the request for realizing the customized soft keyboard includes: when the button BUTTON_4 is clicked for the first time, the function of moving left will be realized, and clicking this button again within a time of 300 milliseconds will realize the function of inputting a character A. That is, the BUTTON_4 corresponds to two function events, including AVK_LEFT, and AVK_A, according to Table 1, their respectively corresponding identifier codes are: FUNCTION_LEFT, and FUNCTION_A, and then the generated function information profile includes:
FLAG: BUTTON_4/TIME: 300/FUNCTON: FUNCTION_LEFT/FUNCTON: FUNCTION_A.

The above-mentioned is only a format of the function information profile, certainly, the embodiment of the present invention is not limited to this, and there can also be other formats.

It is obvious that the function information profile includes: the button, the button function event and the corresponding relationship with the identifier code.

In step 105: the customized soft keyboard is generated according to the shape profile and the function information profile.

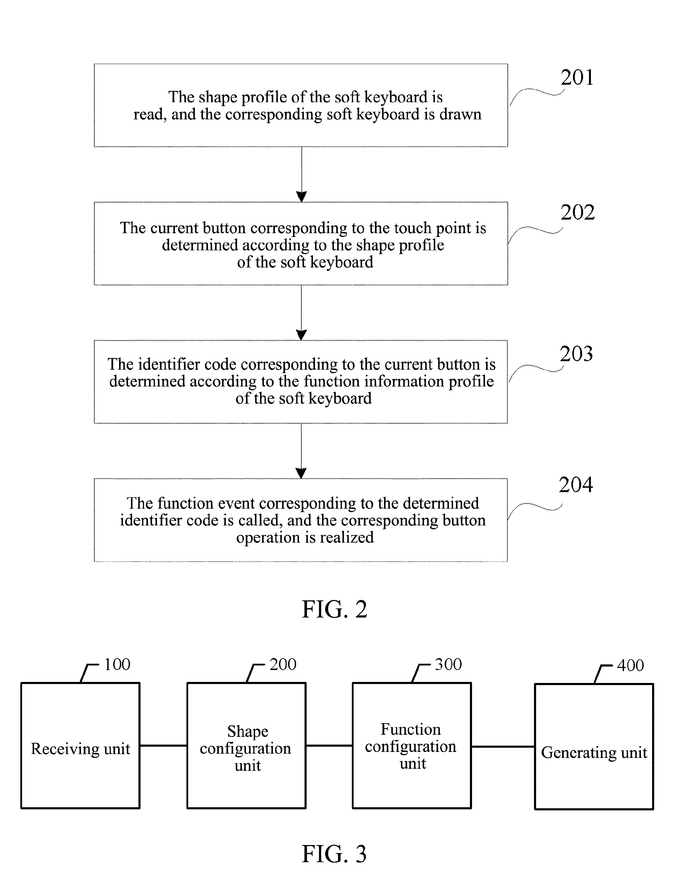

According to the above-mentioned processes, generating two profiles of the soft keyboard can generable a workable soft keyboard. Referring to FIG. 2, the process of generating the customized soft keyboard according to the shape profile and the function information profile includes:

In step 201: the shape profile of the soft keyboard is read, and the corresponding soft keyboard is drawn.

The shape profile of the soft keyboard includes: the baseboard panel profile of the soft keyboard and the button profile of each button in the soft keyboard, therefore, the baseboard panel of the soft keyboard is drawn according to the read baseboard panel profile of the soft keyboard firstly, for example, the baseboard panel profile is: FLAG:
BOTTOM_PANEL/SHAPE: RECT/WIDTH: 240/HEIGHT: 120/POS_X: 0/POS_Y: 0/. Then a rectangle with the width being 240 pixels and the height being 120 pixels can be drawn at the position with the coordinate being (0, 0) on the screen, as the baseboard panel of the soft keyboard.

Then, each button in the drawn baseboard panel is drawn according to the button profile of each button in the soft keyboard.

In step 202: the current button corresponding to the touch point is determined according to the shape profile of the soft keyboard.

When using the soft keyboard, if a certain point of the soft keyboard on the touch screen is the touched, the soft keyboard is put in according to the shape profile, and the current button corresponding to the touch point is determined.

The button profile of the soft keyboard records the information, such as the coordinate position, size, etc. corresponding to each button, therefore, after obtaining the coordinate and size of the touch point, the corresponding current button can be found in the shape profile, that is, the corresponding current button is determined.

In step 203: the identifier code corresponding to the current button is determined according to the function information profile of the soft keyboard.

The function information profile records each button, the button function event and the corresponding identifier code, that is, the function information profile includes: the button, the button function event, and the corresponding relationship with the identifier code. In step 202, the current button is already determined, thus the identifier code of the current button can be determined according to the relationship. The number of the identifier code(s) corresponding to the current button can be one, two, or more.

In step 204: the function event corresponding to the determined identifier code is called, and the corresponding button operation is realized.

After already determining the identifier code, the operating system of the terminal device will automatically find out the function event corresponding to the identifier code according to the already configured corresponding relationship between the function event and the identifier code, and then the found function event is called. Generally, the function event includes the executable API functions, and these executable API functions can be called by the operating system of the terminal device, thus the corresponding button operation is realized, that is, the button function of the soft keyboard is realized.

In the embodiment of the present invention, not only one soft keyboard can be generated and used, but also the already generated soft keyboard can be edited at the same time. That is, after generating the shape profile and the function information profile of the soft keyboard, it further includes:
receiving a soft keyboard editing request, editing the shape profile of the corresponding soft keyboard according to the soft keyboard shape information in the soft keyboard editing request, editing the function information profile of the corresponding soft keyboard according to the button function event in the soft keyboard editing request. Wherein, the editing includes: revising, deleting, or adding.

In the above-mentioned embodiment, the shape profile of the soft keyboard is generated firstly, and then the function information profile of the soft keyboard is generated, however, the embodiment of the present invention is not limited to this, also, the function information profile of the soft keyboard can be generated firstly, and then the shape profile of the soft keyboard is generated.

An apparatus for generating a soft keyboard can be constructed according to the above-mentioned process of generating the soft keyboard, referring to FIG. 3, including: a receiving unit 100, a shape configuration unit 200, a function configuration unit 300 and a generating unit 400; wherein,
the receiving unit 100 is configured to receive a request for realizing a customized soft keyboard;
the shape configuration unit 200 is configured to generate a shape profile of the soft keyboard according to shape information of the soft keyboard in the request;
the function configuration unit 300 is configured to determine an identifier code corresponding to a button function event in the request according to a stored corresponding relationship between a function event and the identifier code, and generate a function information profile of the soft keyboard according to the determined identifier code; and the generating unit 400 is configured to generate the customized soft keyboard according to the shape profile and the function information profile.

Wherein, the shape configuration unit 200 includes:
a baseboard panel configuration subunit, configured to, according to baseboard panel parameters in the request, generate a baseboard panel profile in the shape profile; and
a button configuration subunit, configured to, according to shape parameters of each button in the request, generate a button profile in the shape profile.

The generating unit 400 includes:
a generating subunit, configured to, according to the shape profile of the soft keyboard, draw a corresponding soft keyboard and determine a current button corresponding to a touch point;
a determining subunit, configured to, according to the function information profile of the soft keyboard, determine the identifier code corresponding to the current button; and
a calling subunit, configured to call the function event corresponding to the identifier code, and realize the button function of the soft keyboard.

The apparatus for realizing the customized soft keyboard further includes:
an editing unit, configured to edit the shape profile according to the soft keyboard shape information of a received soft keyboard editing request,
and edit the function information profile according to the button function event in the received soft keyboard editing request.

The apparatus for realizing the customized soft keyboard in the embodiment of the present invention can be applied in a terminal device. The terminal device includes a mobile terminal, for example, a mobile phone; or an intelligent terminal, such as an ATM machine.

In the embodiment of the present invention, after receiving the request for realizing the customized soft keyboard, the shape profile of the soft keyboard is generated according to the soft keyboard shape information in the request, the identifier code corresponding to the button function event in the request is determined according to the stored corresponding relationship between the function event and the identifier code, and the function information profile of the soft keyboard is generated according to the determined identifier code. In this way, during the usage, the soft keyboard is generated through the shape profile, after clicking a certain point on the touch screen of the terminal device, the current button corresponding to the touch point can be determined through the shape profile, then, the identifier code corresponding to the button is determined through the function information profile, such that the function event corresponding to the identifier code is called and the corresponding operation is completed, thus, realizing the use of the customized soft keyboard. It is obvious that if the soft keyboard shape information in the request is different, then the shapes and the button positions of the generated soft keyboard are different, if the button function events in the request for realizing the customized soft keyboard are different, the identifier codes of each button in the soft keyboard are different as well, and the called function events are also different, therefore, different soft keyboards can be generated according to different user requirements or different application scenarios, thus a bottleneck of the high speed development of the portable terminal is broken through and the generality of the terminal device is improved, and also the user experience is improved greatly.

Obviously, those skilled in the art can make a plurality of changes and modifications to the present invention without departing from the spirit and scope of the present invention. In this way, if all these changes and modifications of the present invention belong to the scope of the claims of the present invention and its equivalent technology, then the present invention also intends to include these changes and modifications.

## Claims

1. A method for generating a soft keyboard, comprising:
receiving a request for realizing a customized soft keyboard;
generating a shape profile of the soft keyboard according to shape information of the soft keyboard in the request;
determining an identifier code corresponding to a button function event in the request according to a stored corresponding relationship between a function event and the identifier code, and
generating a function information profile of the soft keyboard according to the determined identifier code; and
generating the customized soft keyboard according to the shape profile and the function information profile.

2. The method according to claim 1, wherein, generating a shape profile of the soft keyboard comprises:
according to baseboard panel parameters in the request,
generating a baseboard panel profile in the shape profile; and
according to shape parameters of each button in the request,
generating a button profile in the shape profile.

3. The method according to claim 2, wherein, the baseboard panel parameters comprises: at least one of a shape, a size, a coordinate position, a background picture of the baseboard panel; and
the shape parameters of the button comprises: at least one of a shape, a size, a coordinate position, a background picture of the button.

4. The method according to claim 1, wherein, generating the customized soft keyboard according to the shape profile and the function information profile comprises:
according to the shape profile of the soft keyboard, drawing a corresponding soft keyboard and determining a current button corresponding to a touch point;
according to the function information profile of the soft keyboard,
determining the identifier code corresponding to the current button; and
calling the function event corresponding to the identifier code, and
realizing the button function of the soft keyboard.

5. The method according to claim 1, after generating the function information profile of the soft keyboard, further comprising:
according to the soft keyboard shape information of a received soft keyboard editing request, editing the shape profile; and
according to the button function event in the received soft keyboard editing request, editing the function information profile.

6. An apparatus for generating a soft keyboard, comprising: a receiving unit, a shape configuration unit, a function configuration unit and a generating unit; wherein,
the receiving unit is configured to receive a request for realizing a customized soft keyboard;
the shape configuration unit is configured to generate a shape profile of the soft keyboard according to shape information of the soft keyboard in the request;
the function configuration unit is configured to determine an identifier code corresponding to a button function event in the request according to a stored corresponding relationship between a function event and the identifier code, and generate a function information profile of the soft keyboard according to the determined identifier code; and
the generating unit is configured to generate the customized soft keyboard according to the shape profile and the function information profile.

7. The apparatus according to claim 6, wherein, the shape configuration unit comprises: a baseboard panel configuration subunit and a button configuration subunit, wherein,
the baseboard panel configuration subunit is configured to, according to baseboard panel parameters in the request, generate a baseboard panel profile in the shape profile; and
the button configuration subunit is configured to, according to shape parameters of each button in the request, generate a button profile in the shape profile.

8. The apparatus according to claim 6, wherein, the generating unit comprises: a generating subunit, a determining subunit and a calling subunit; wherein,
the generating subunit is configured to, according to the shape profile of the soft keyboard, draw a corresponding soft keyboard and determine a current button corresponding to a touch point; the determining subunit is configured to, according to the function information profile of the soft keyboard, determine the identifier code corresponding to the current button; and
the calling subunit is configured to, call the function event corresponding to the identifier code, and realize the button function of the soft keyboard.

9. The apparatus according to claim 6, further comprising:
an editing unit, configured to edit the shape profile according to the soft keyboard shape information of a received soft keyboard editing request, and edit the function information profile according to the button function event in the received soft keyboard editing request.

10. A terminal device, comprising: a receiving unit, a shape configuration unit, a function configuration unit and a generating unit; wherein,
the receiving unit is configured to receive a request for realizing a customized soft keyboard;
the shape configuration unit is configured to generate a shape profile of the soft keyboard according to shape information of the soft keyboard in the request;
the function configuration unit is configured to determine an identifier code corresponding to a button function event in the request according to a stored corresponding relationship between a function event and the identifier code, and generate a function information profile of the soft keyboard according to the determined identifier code; and
the generating unit is configured to generate the customized soft keyboard according to the shape profile and the function information profile.

11. The terminal device according to claim 10, wherein, the shape configuration unit comprises: a baseboard panel configuration subunit and a button configuration subunit, wherein,
the baseboard panel configuration subunit is configured to, according to baseboard panel parameters in the request, generate a baseboard panel profile in the shape profile; and
the button configuration subunit is configured to, according to shape parameters of each button in the request, generate a button profile in the shape profile.

12. The terminal device according to claim 10, wherein, the generating unit comprises: a generating subunit, a determining subunit and a calling subunit; wherein,
the generating subunit is configured to, according to the shape profile of the soft keyboard, draw a corresponding soft keyboard and determine a current button corresponding to a touch point; the determining subunit is configured to, according to the function information profile of the soft keyboard, determine the identifier code corresponding to the current button; and
the calling subunit is configured to, call the function event corresponding to the identifier code, and realize the button function of the soft keyboard.

13. The terminal device according to claim 10, further comprising:
an editing unit, configured to edit the shape profile according to the soft keyboard shape information of a received soft keyboard editing request, and edit the function information profile according to the button function event in the received soft keyboard editing request.
